# EUROPEAN PATENT APPLICATION

(11) **EP 1 801 777 A1**
(43) Date of publication of application: **27.06.2007**
(21) Application number: 05790590.3
(22) Date of filing: 06.10.2005
(51) Int. Cl.: G09G 3/36, G02F 1/133, G09G 3/20, G09G 3/34, G09G 5/00, G09G 5/10

(54) **VIDEO DISPLAY DEVICE**

(30) Priority: 08.10.2004 JP 2004295920; 22.09.2005 JP 2005275698
(71) Applicant: MATSUSHITA ELECTRIC INDUSTRIAL CO., LTD., Osaka 571-8501 (JP)
(72) Inventor: MICHIYASU, Takayuki c/o Matsushita El. Ind. Co., Ltd., Chuo-ku, Osaka-shi, Osaka 540-6319 (JP); KATSUMI, Keisuke c/o Matsushita El. Ind. Co., Ltd., Chuo-ku, Osaka-shi, Osaka 540-6319 (JP); MATSUOKA, Yuichi c/o Matsushita El. Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/018525
(87) International publication number: WO 2006/040998

(57) **Abstract**

Information about an emergency warning is received and whether an emergency warning condition has occurred or not is determined based on the information. When the emergency warning condition is determined not to have occurred, the display power mode is determined based on the selection of the viewer. When the emergency warning condition is determined to have occurred, the display power mode is automatically changed to the super-low power consumption mode which reduces the power consumption, while the original video information is displayed as it is by cutting down or changing part of the video information. Thus, when a disaster such as an earthquake occurs and power consumption reduction is needed, the screen display is automatically reduced to the minimum level that allows the viewer to obtain information, thereby minimizing the power consumption of video display.

## Description

### TECHNICAL FIELD

The present invention relates to a video display device capable of reducing electric power consumption on screen display.

### BACKGROUND ART

In general, video display devices typified by television receivers can provide large quantities of information in no time through the screen display. The screen display, however, operates at high power, thus causing television receivers to require higher power consumption than radio receivers, which output audio only. Therefore, various video display devices provided with the function of reducing power consumption during viewing have been suggested.

One example of the conventional video display devices provided with the function of reducing power consumption is disclosed in Japanese Patent Unexamined Publication No. 2000-10068. The device suggested here achieves power consumption reduction and at the same time provides optimum display quality by making the video display luminance automatically controlled based on the ambient brightness detected by a means for detecting the amount of outdoor light.

Japanese Patent Unexamined Publication No. 2003-345297 discloses a display device which achieves power consumption reduction by decreasing the luminance of the original video without a sense of discomfort by multiplying an input video signal by luminance-reducing characteristics. The characteristics are characterized in that the luminance is gradually reduced from the screen center to the screen edges, and in that the screen edges have a region with a fixed luminance value.

Japanese Patent Unexamined Publication No. S56-24880 suggests a control device which achieves power consumption reduction of a receiver by changing the voltage of a deflection circuit so as to change the screen size of a cathode ray tube display device.

Japanese Utility Model Unexamined Publication No. S62-30482 suggests a display device which achieves power consumption reduction by controlling chrominance signals so as not to display one or two colors out of the three colors: red, blue and green.

Japanese Patent Unexamined Publication No. H11-196342 discloses a conventional television receiver which can reduce standby power consumption of a receiving terminal receiving digital television broadcasts, and can receive an emergency warning broadcast even during the standby period.

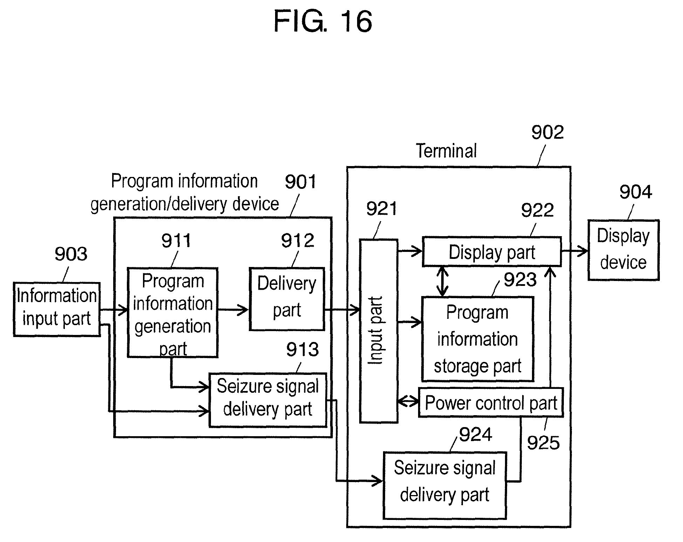

The last-mentioned conventional technique will be described as follows with Fig. 16. Fig. 16 is a block diagram showing the structure of the conventional video display device. In Fig. 16, program information generation/delivery device 901, which is provided for digital television broadcasting such as satellite broadcasting, includes seizure signal delivery part 913 directly notifying the viewer about a program change or an emergency broadcast by using a method other than a broadcast route such as satellite waves. Receiving terminal 902 includes seizure signal input part 924 for receiving the notice. The seizure signal activates input part 921 via power control part 925. Input part 921 monitors information being entered, and receives information about changes in programs that are scheduled by the viewer to be videotaped or about an emergency broadcast. If there is something to be updated in program information stored in program information storage part 923, input part 921 updates it. When the acquisition and update of necessary information are over, power supply to the input part is stopped. If there is information about an emergency broadcast, power supply to the display part is started so as to display the content of the emergency broadcast on a display device. While reducing the power consumption of the terminal in this manner, the terminal program is automatically updated in accordance with the time changes of the programs that are scheduled to be videotaped.

Video display devices such as television receivers, which provide large quantities of information in no time through the screen display, are powerful as a means for people to collect information in the event of a disaster like an earthquake or typhoon. However, in the event of a disaster, electricity and other supplies might be stopped. Under such a situation, when there is an emergency power supply like a self-generating system, people can use electric devices, but are required to use less electricity than in the normal time. In disaster areas, on the other hand, the power supply becomes unstable if not stopped completely, so that people in the areas are forced to save electricity.

The aforementioned conventional technique, however, achieves power consumption reduction substantially without degrading the image quality of video display than the normal viewing condition. In other words, the technique is intended to reduce power consumption, while maintaining the visibility in the normal viewing condition high enough for the viewer to enjoy programs. Thus it is impossible to expect a forcible and drastic power reduction that is required in the event of an emergent disaster. Therefore, when power is shut off in the event of an emergency or disaster such as an earthquake, in houses and facilities having self-generating systems like solar batteries, stored power is exhausted too soon for the viewers to collect information.

Although the conventional video display device is useful in terms of information collection because of its ability to receive an emergency warning broadcast, the power saving technique can achieve a power consumption reduction only in the standby state, and cannot be used to save power for the viewer to collect information in the event of an emergency or disaster.

### SUMMARY OF THE INVENTION

In order to solve the aforementioned problem, the video display device of the present invention includes: a display power mode selection part for outputting an indication signal indicating a display power mode based on the viewer's selection action; an emergency warning determination part having a means for receiving information about an emergency warning and determining that an emergency warning condition has occurred, based on the information; a display power mode determination part for receiving the output signal of each of the display power mode selection part and the emergency warning determination part, and determining the display power mode based on the output of the display power mode selection part when the emergency warning condition is determined to have not occurred, and providing the display control part instructions to switch the display power mode to a super-low power consumption mode which achieves power consumption reduction, regardless of the output of the display power mode selection part when the emergency warning condition is determined to have occurred, while the original video information is displayed as it is by cutting down or changing part of the video information; a display part for displaying video; and a display control part for controlling the display part so that video information is displayed in the display power mode based on the indication signal of the display power determination part so as to be displayed as actual video.

According to the video display device of the present invention thus structured, when a disaster such as an earthquake takes place and an emergency warning condition occurs in which power consumption reduction is needed, the screen display is automatically reduced to the minimum level that allows the viewer to obtain information, thereby minimizing the power consumption of video display. Thus, the present invention provides a video display device capable of securing information collection for a long time in the event of an emergency or disaster.

### BRIEF DESCRIPTION OF THE DRAWINGS

Fig. 1 is a block diagram showing the structure of a video display device according to a first embodiment of the present invention.
Fig. 2A shows an example of display in a super-low power consumption mode according to the first embodiment of the present invention.
Fig. 2B shows an example of display in the super-low power consumption mode according to the first embodiment of the present invention.
Fig. 3A shows another example of display in the super-low power consumption mode according to the first embodiment of the present invention.
Fig. 3B shows another example of display in the super-low power consumption mode according to the first embodiment of the present invention.
Fig. 4A shows another example of display in the super-low power consumption mode according to the first embodiment of the present invention.
Fig. 4B shows another example of display in the super-low power consumption mode according to the first embodiment of the present invention.
Fig. 5 shows an example of the selection screen of the super-low power consumption mode according to the first embodiment of the present invention.
Fig. 6 is a block diagram showing the structure of a video display device according to a second embodiment of the present invention.
Fig. 7A shows an example of display in a super-low power consumption mode according to the second embodiment of the present invention.
Fig. 7B shows an example of display in the super-low power consumption mode according to the second embodiment of the present invention.
Fig. 8 is a block diagram showing the structure of a video display device according to a third embodiment of the present invention.
Fig. 9 is a cross sectional view showing the structure of a display part according to a fourth embodiment of the present invention.
Fig. 10 shows an example of control in a super-low power consumption mode according to the fourth embodiment of the present invention.
Fig. 11 shows an example of control in the super-low power consumption mode according to the fourth embodiment of the present invention.
Fig. 12 shows an example of control in the super-low power consumption mode according to the fourth embodiment of the present invention.
Fig. 13 is a block diagram showing the structure of a video display device according to a fifth embodiment of the present invention.
Fig. 14 is a block diagram showing the structure of a video display device according to a sixth embodiment of the present invention.
Fig. 15 is a circuit diagram showing an example of the structure of a power failure detection part according to the sixth embodiment of the present invention.
Fig. 16 is a block diagram showing the structure of a video display device according to the conventional technique.

### REFERENCE MARKS IN THE DRAWINGS

- 101, 201, 301, 501, 601: video display device
- 102: television antenna
- 103: tuner/demodulation part
- 104: TS decoder
- 105: MPEG decoder
- 106, 206: display control part
- 107: display part
- 108: subtitle extraction part
- 109: additional information extraction part
- 110: emergency warning analysis part
- 111, 311: display power mode determination part
- 112, 612: display power mode selection part
- 113: emergency warning reception part
- 115, 315, 515, 615: emergency warning determination part
- 131a, 131b: display range
- 132: telop
- 143: backlight
- 144: light guide panel
- 145: miniature backlight
- 146: diffused panel
- 147: liquid crystal panel
- 148: case
- 157: phosphorescent material
- 161: emergency power supply
- 162: power failure detection part
- 163: emergency power supply operation notification part
- 164: commercial power supply
- 165: power failure detection part
- 166: emergency power supply operation detection part
- 171: bistable multivibrator
- 176: CR integration circuit

### DETAILED DESCRIPTION OF PREFERRED EMBODIMENTS

### FIRST EXEMPLARY EMBODIMENT

A first embodiment of a video display device of the present invention will be described as follows with drawings.

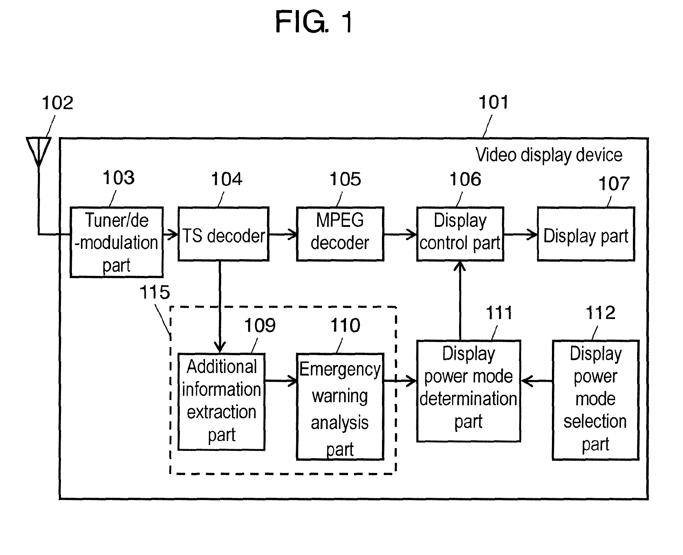

Fig. 1 is a block diagram showing the structure of the video display device according to the first embodiment of the present invention. The video display device of the present embodiment is intended to be a video display device (a digital television receiver) for receiving digital broadcasting. The video display device of the present invention can be a device provided with a means for acquiring video information and a means for displaying the video information. Specific examples are: television receivers receiving digital or analog satellite or terrestrial broadcasting; CATVs receiving cable broadcasting; and personal computers capable of acquiring information through a network such as the Internet and displaying the information on the screen.

In Fig. 1, television antenna 102 receives digital broadcasting. Tuner/demodulation part 103 converts signals received by television antenna 102 into a transport stream (hereinafter, "TS"). TS decoder 104 decodes the TS outputted from tuner/demodulation part 103 and outputs it as a video and audio stream. MPEG decoder 105 MPEG-decodes the video stream sent from TS decoder 104. Display control part 106 controls display part 107 so as to display the video stream as actual video.

Additional information extraction part 109 extracts information other than the video and audio stream from the TS, such as additional information and control information. Emergency warning analysis part 110 determines whether an emergency warning for the occurrence of a disaster has been announced or not from the extracted additional information. In the present first embodiment, additional information extraction part 109 and emergency warning analysis part 110 make up emergency warning determination part 115 which receives information about an emergency warning and determines that an emergency warning condition has occurred, based on the information. Display power mode selection part 112 outputs an indication signal indicating the display power mode which is selected by the viewer. Display power mode determination part 111 determines the display power mode based on the respective output signals of emergency warning analysis part 110 and of display power mode selection part 112, and provides instructions to display control part 106.

Video display device 101 of the present first embodiment has three display power modes as follows. A first mode is a normal power mode in which a normal amount of power is consumed with the normal screen display; a second mode is a power saving mode in which power consumption is reduced by lowering the luminance than in the normal power mode, without cutting down or changing the screen information; and a third mode is a super-low power consumption mode in which power consumption is more reduced than in the power saving mode by cutting down or changing part of the video information, instead of displaying the original video information as it is. It should be noted that the super-low power consumption mode does not include the power consumption reduction achieved by uniformly lowering the video display luminance.

Operation of video display device 101 of the present invention thus structured will be described as follows.

In general, the viewer watches a program either in the normal power mode or the power saving mode by setting it in display power mode selection part 112. In this case, display control part 106 receives the indication signal indicating the display power mode from display power mode determination part 111 based on the selection result of display power mode selection part 112. When the normal power mode has been selected, display control part 106 makes display part 107 display video without changing the data of the decoded video stream and at the normal luminance level. On the other hand, when the power saving mode has been selected, display control part 106 makes display part 107 display video without changing the data of the decoded video stream, but at a lower luminance level than the normal luminance level. In these modes, the viewer can enjoy a program sent from a broadcast station in the original condition, although different viewers have different preferences in luminance level.

The operation of video display device 101 of the present invention will be described on the assumption that a disaster has occurred and an emergency warning has been announced from a broadcast station.

First of all, information to be multiplexed into an MPEG TS will be described. The information to be multiplexed into the TS includes PSI (Program Specific Information) as control information and SI (Service Information) as interface information for the user to select programs, in addition to the information to be provided to the viewer such as video and audio data, subtitle information and data broadcasting. The information contained in the PSI is organized in a variety of tables, and one of the tables is a PMT (Program Map Table) which describes information about the program components contained in the TS. The information arbitrarily described here includes an emergency information descriptor. The emergency information descriptor makes its flag "ON" in the event of an earthquake or its warning announcement or when there is an emergency warning broadcast such as a tidal wave warning, and describes detailed information about the emergency warning such as area code or warning level.

For example, assume that an earthquake has occurred and video display device 101 has received a digital broadcasting wave in which the flag of the emergency information descriptor is "ON". In Fig. 1, television antenna 102 receives digital broadcasting, and tuner/demodulation part 103 converts it into a TS. TS decoder 104 decodes the TS outputted from tuner/demodulation part 103 and outputs it as a video and audio stream.

Additional information extraction part 109 extracts information other than the video and audio stream from the TS, such as additional information and control information, and checks the emergency information descriptor in the extracted PMT. When the flag of the emergency information descriptor is "OFF", additional information extraction part 109 outputs a signal indicating that there is no emergency information. On the other hand, when the flag of the emergency information descriptor is "ON", additional information extraction part 109 continues to extract the information about the area code and warning level, and outputs a signal indicating that an emergency warning is currently broadcast, and further outputs the extracted information about the area code and warning level.

Emergency warning analysis part 110 receives the signal indicating whether an emergency warning is currently broadcast or not, and further receives the information about the area code and warning level from additional information extraction part 109 when the emergency warning is currently broadcast, thereby determining whether the emergency warming condition has occurred or not. The term "emergency warning condition" used in the present application indicates a condition in which there is a possibility of a disaster, and power consumption should be restricted.

More specifically, when an emergency warning is not being broadcast, emergency warning analysis part 110 determines that the emergency warning condition has not occurred. If the emergency warning is being broadcast, emergency warning analysis part 110 first checks the area code. Emergency warning analysis part 110, which stores the area code of the area where video display device 101 is located, compares it with the extracted area code. When these area codes are different, emergency warning analysis part 110 determines that the emergency warning condition has occurred in another area and not in the area where video display device 101 is located. When these area codes match each other, emergency warning analysis part 110 determines whether the warning level exceeds a specified level or not. When it exceeds the specified level, emergency warning analysis part 110 determines that the emergency warning condition has occurred, and when it does not exceed the specified level, emergency warning analysis part 110 determines that the emergency warning condition has not occurred.

Display power mode determination part 111 receives information indicating whether the emergency warning condition has occurred or not from emergency warning analysis part 110 and determines the display power mode. When the emergency warning condition has not occurred, it obviously means that the normal condition is present, so that display power mode determination part 111 determines the display power mode based on the output of display power mode selection part 112 as described above. On the other hand, however, when the emergency warning condition has occurred, display power mode determination part 111 switches the display to the super-low power consumption mode, regardless of the output of display power mode selection part 112.

Display control part 106 receives an indication signal indicating the super-low power consumption mode from display power mode determination part 111, and changes the data in the video stream to a prescribed display content in the super-low power consumption mode or provides specific setting controls to display part 107. As a result, of all power consumption modes available, the lowest power consumption mode is achieved that can display some form of information.

The following is a description about an example of display in the super-low power consumption mode in the first embodiment.

When display part 107 is, for example, a plasma display device, the display power changes in accordance with the area and intensity of the luminescent cells in video display. It goes without saying that the power consumption reduces as the display area or the number of the luminescent cells gets smaller. Furthermore, the power consumption reduces with decreasing luminescent intensity or average luminance.

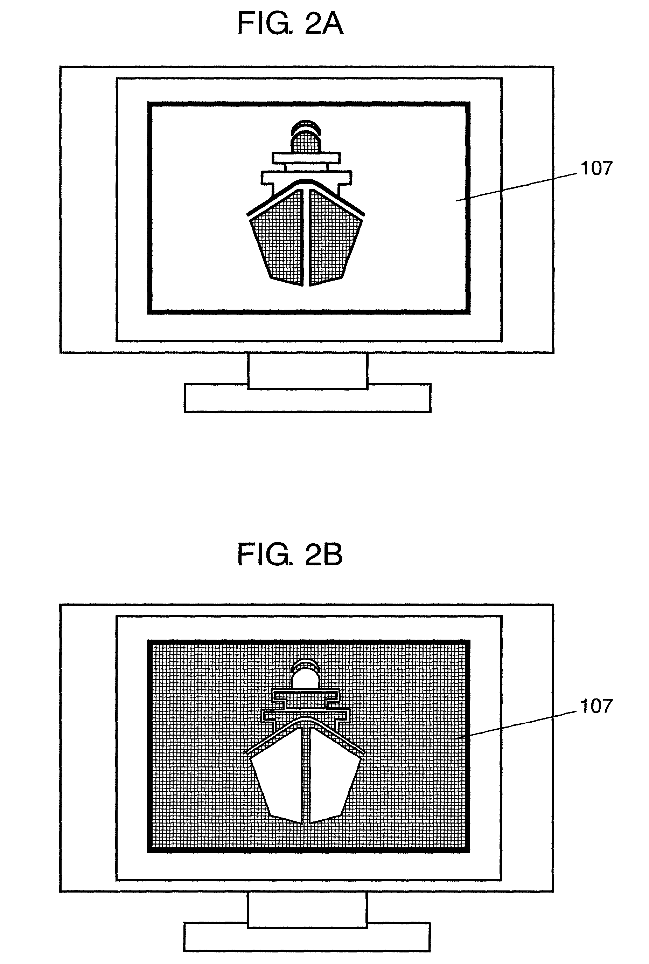

Figs. 2A and 2B show examples of display in the super-low power consumption mode according to the first embodiment of the present invention. First, video signal data to be displayed is converted to black and white on display. The display area ratio between the white area and the black area (the hatched area) is calculated, and when the white area is larger, white and black are reversed to make the white area smaller on display. This can drastically reduce power consumption as compared with the normal viewing condition. Since the display video is displayed in monochrome in this case, if the green luminescent cells, for example, are exclusively made to emit light, the number of the luminescent cells used for light emission is reduced to 1/3, thereby further drastically reducing the power consumption.

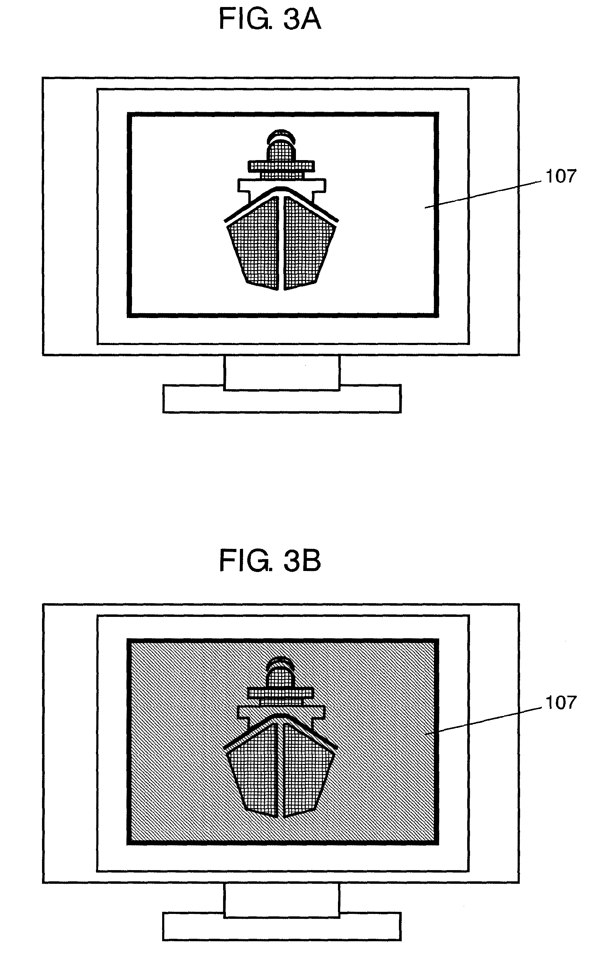

In other examples shown in Figs. 3A and 3B, the areas whose luminance values are not higher than the specified luminance are made black with the lowest luminance so as to eliminate the power consumption in the areas. The other areas whose luminance values are higher than the specified luminance are made gray (the shaded area) with the specified luminance so as to further drastically reduce the power consumption.

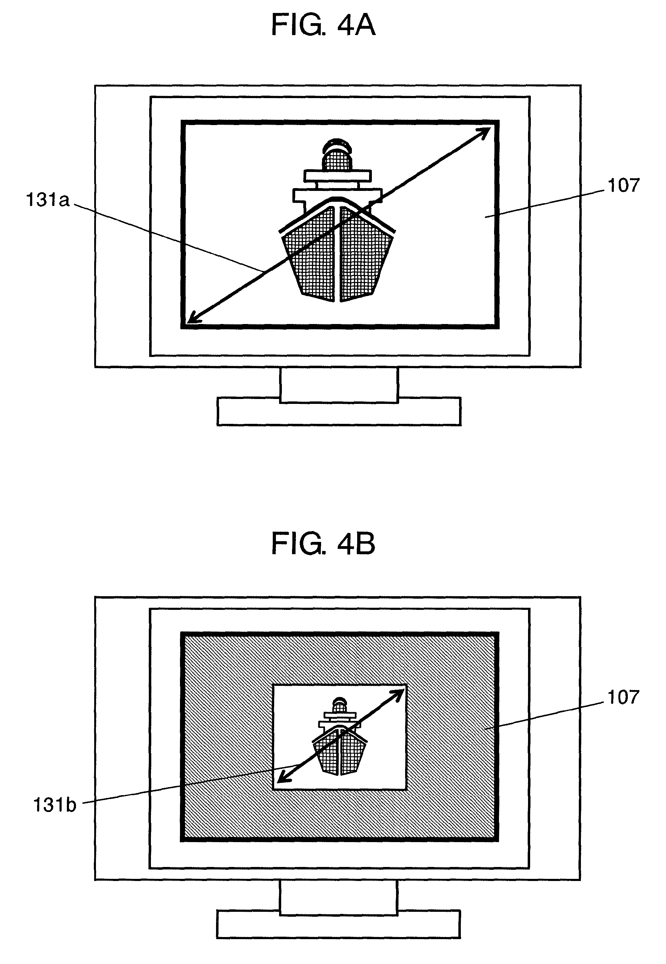

In other examples shown in Figs. 4A and 4B, the number of display dots is reduced to 1/2 or 1/3 by thinning the dots out or by generating complementary data. As a result, video display range 131a in Fig. 4A is decreased to video display range 131b in Fig. 4B so as to reduce the light-emitting area, thereby achieving a drastic power consumption reduction.

These processes for cutting down or changing part of the video information will damage the original video information, and therefore are not suitable for the viewer to enjoy programs in the normal viewing condition. Even so, however, these processes can help the viewer to acquire a variety of information from the video information in the emergency warning condition. Moreover, these processes have the effect of drastically reducing power consumption, as compared with displaying the original video information as it is.

It should be noted that the aforementioned processes to achieve the super-low power consumption mode can be solely provided as functions of the present invention, or two or more processes can be combined to achieve the super-low power consumption mode. The latter case achieves a further drastic power consumption reduction.

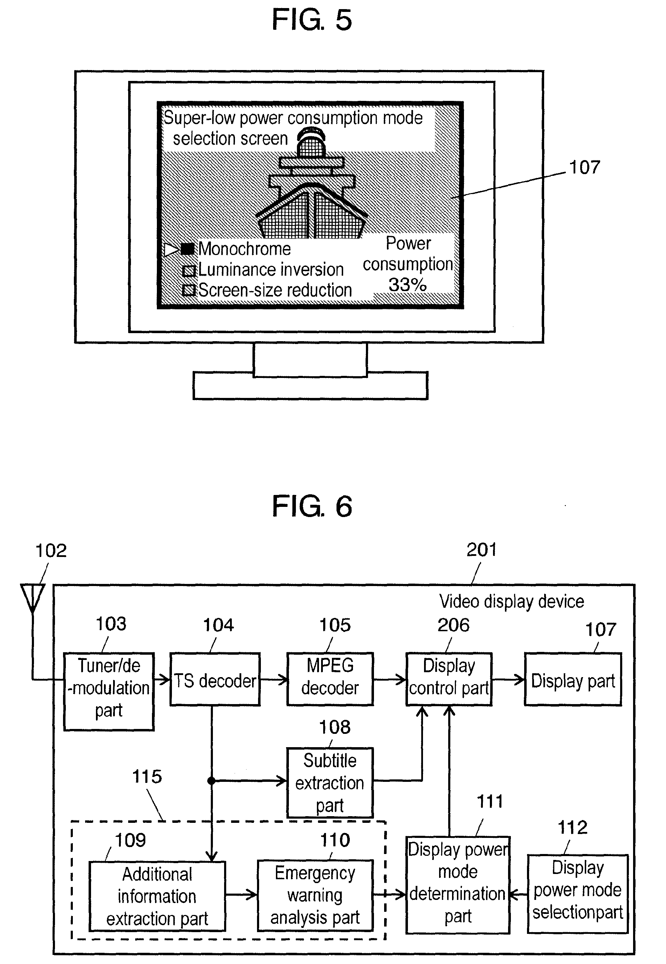

It is alternatively possible to provide a plurality of functions to achieve a plurality of super-low power consumption modes so that the viewer can choose one of them. In this case, as shown in Fig. 5, the screen formed by actually changing a normal broadcast is displayed as a selection screen, so that the viewer can see what the screen will look like after the process of cutting down or changing part of the video information, and can also see about what the power consumption will be as compared with the normal condition. This can reflect the preferences of the viewer and achieve super-low power consumption in the emergency warning condition.

The super-low power consumption mode is cancelled when the viewer selects a display power mode other than the super-low power consumption mode via display power mode selection part 112. More specifically, when the viewer selects either the normal power mode or the power saving mode in display power mode selection part 112, the selected display power mode is notified to display power mode determination part 111, which provides display control part 106 with instructions to switch the selection mode.

However, display power mode determination part 111 can be made to determine to continue video display in the super-low power consumption mode without honoring the viewer's selection when the emergency warning analysis part is continuously outputting the determination indicating the presence of the emergency warning condition. It is alternatively possible to add an indication item to cancel the super-low power consumption mode as one more option in the display power mode. In this case, after the canceling, the super-low power consumption mode is switched to the display power mode that was previously selected.

As described hereinbefore, according the video display device of the first embodiment of the present invention, when a disaster such as an earthquake takes place and the emergency warning condition occurs in which power consumption reduction is needed, the screen display is automatically reduced to the minimum level that allows the viewer to obtain information, thereby minimizing the power consumption of video display.

### SECOND EXEMPLARY EMBODIMENT

A second embodiment of the video display device of the present invention will be described as follows with reference to drawings. The same components as those in the first embodiment will be referred to with the same reference remarks as those in the first embodiment, and their description will be omitted as appropriate.

Fig. 6 is a block diagram showing the structure of a second embodiment of video display device 201 of the present invention. Fig. 6 includes the same components as those in the first embodiment shown in the block of Fig. 1: namely, television antenna 102; tuner/demodulation part 103, TS decoder 104, MPEG decoder 105; display part 107; additional information extraction part 109; emergency warning analysis part 110; display power mode selection part 112; and display power mode determination part 111. The description of these components will be omitted.

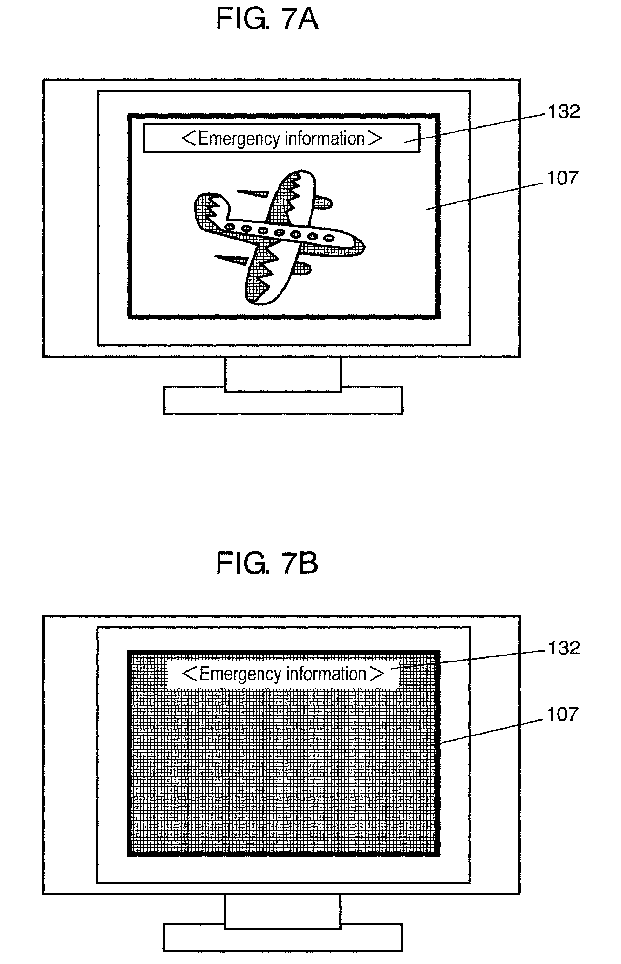

Fig. 6 differs from Fig. 1 in providing subtitle extraction part 108 and display control part 206 which has a slightly different function from display control part 106. Subtitle extraction part 108 extracts subtitle information and character information in data broadcasting out of the information multiplexed into the TS from the output of TS decoder 104, and constitutes information for screen display. The character information for the screen display is transmitted to display control part 206, and is usually displayed on display part 107 as telop 132 or character information on screen as shown in Fig. 7A.

In general, in the event of a disaster such as an earthquake, little information is available immediately after the earthquake. As the initial report, the occurrence, area and magnitude of the earthquake are displayed as a telop (subtitle information). Thus, when a disaster occurs, it is extremely useful for the viewer to have subtitle information available as a means to collect information.

The following is a description of the operation of the video display device of the present second embodiment. Note that the operation of determining that the emergency warning condition has occurred out of the additional information contained in the TS, and of changing the display screen of display part 107 to the super-low power consumption mode by display control part 206 at the instruction of display power mode determination part 111 in the case of the emergency warning condition will be omitted because it is equal to that in the first embodiment described with Fig. 1.

When the emergency warning condition has occurred, in order to display the character information transmitted from subtitle extraction part 108 as a telop, display control part 206 displays the data after changing it as follows.

Fig. 7B shows an example of display in the super-low power consumption mode according to the present second embodiment. Display control part 206 first discriminates telop 132 from an input signal, and then changes the video on display part 107 in such a manner that motion information is undisplayed; the background is blackened (the hatched area); and telop 132 is exclusively displayed either in white or a color other than black. As a result, as shown in Fig. 7B, a telop (subtitle information) about emergency information is exclusively displayed on the screen having no light emission.

This allows display information to be displayed after being drastically reduced in size so as to make sure to display the information desired by the viewer in the emergency warning condition, while drastically reducing power consumption as compared with the normal viewing condition.

It is alternatively possible that the aforementioned operation is performed only when the descriptor in the PMT indicates that the emergency warning broadcast includes subtitle information only, and when the entire video stream broadcast content is determined to be the emergency warning broadcast, the screen with a subtitle composed on screen is displayed in another super-low power consumption mode shown in the first embodiment. This makes sure to display the information desired by the viewer, while drastically reducing power consumption depending on the type of the information.

There are cases where subtitle information about an emergency warning is transmitted after being composed in video. In these cases, the subtitle information can be extracted from the video, and as shown in Fig. 7B, the video information can be displayed after being processed in such a manner that the video areas other than the subtitle are blackened with no light emission.

According to the video display device of the second embodiment of the present invention, when a disaster such as an earthquake takes place and the emergency warning condition occurs in which power consumption reduction is needed, the screen display is automatically reduced to the minimum level that allows the viewer to obtain information, thereby minimizing the power consumption of video display.

### THIRD EXEMPLARY EMBODIMENT

The first and second embodiments have shown the cases where the occurrence of the emergency warning condition in the event of a disaster such as an earthquake is determined based on the emergency warning descriptor multiplexed into a broadcast wave. Besides these cases, there are other cases where an emergency warning is announced independently. The announcement can be done by wireless or cable connected to the individual houses in the area.

A third embodiment of the present invention, on the other hand, provides the video display device of the present invention with an emergency warning reception part as a means for detecting the occurrence of a disaster. The same components as those in the aforementioned embodiments will be referred to with the same reference remarks as those in the embodiments, and their description will be omitted as appropriate.

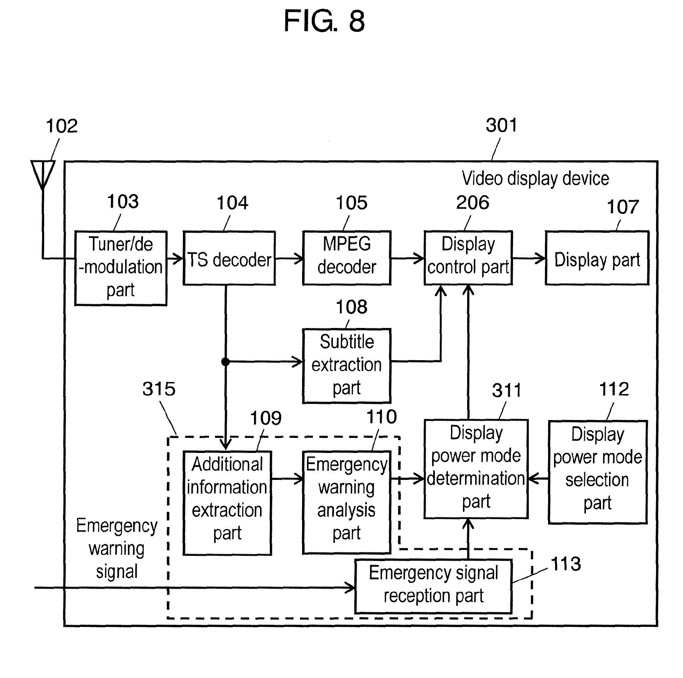

Fig. 8 is a block diagram showing the structure of the video display device according to the present third embodiment. Fig. 8 differs from Fig. 6 in providing emergency warning reception part 113 which receives an emergency warning signal and notifies display power mode determination part 311 that the emergency warning condition has occurred. Fig. 8 further differs from Fig. 6 in that display power mode determination part 311 takes the output of emergency warning reception part 113 into consideration to determine the display power mode. In the present third embodiment, either additional information extraction part 109 and emergency warning analysis part 110 or emergency warning reception part 113, or both of them make up of emergency warning determination part 315, which receives information about the emergency warning and determines that the emergency warning condition has occurred based on the information.

Video display device 301 is structured to receive an emergency warning signal from outside. The emergency warning signal is received by a dedicated receiver when transmitted by wireless, and the output is connected with video display device 301. On the other hand, when the emergency warning signal is transmitted by cable to individual houses, the signal line is connected with video display device 301 either directly or after being branched.

The operation of video display device 301 thus structured will be described as follows. The operation for emergency warning analysis part 110 to determine whether or not the emergency warning condition has occurred out of the additional information in the TS extracted by additional information extraction part 109, and then to notify the result to display power mode determination part 311 will be omitted because it is equal to the operation in the second embodiment.

When an emergency warning is announced independently without being multiplexed into a broadcast wave, the emergency warning signal is entered to emergency warning reception part 113. Emergency warning reception part 113 determines that the emergency warning condition has occurred from the input of the emergency warning signal, and notifies it to display power mode determination part 311. Display power mode determination part 311 receives the information about whether or not the emergency warning condition has occurred from emergency warning analysis part 110 and emergency warning reception part 113 so as to determine the display power mode. When the outputs of these blocks do not indicate the occurrence of the emergency warning condition, display power mode determination part 311 regards the condition as normal and determines the display power mode based on the output of display power mode selection part 112. On the other hand, however, when at least one of emergency warning analysis part 110 and emergency warning reception part 113 notifies the occurrence of an emergency warning condition, display power mode determination part 311 switches the display power mode to the super-low power consumption mode, regardless of the output of display power mode selection part 112.

Display control part 206 receives an indication signal indicating the super-low power consumption mode from display power mode determination part 311, and changes the data in the video stream to a prescribed display content in the super-low power consumption mode or provides setting controls to specific display part 107. As a result, of all power consumption modes available, the lowest power consumption mode is achieved that can display some form of information. The subsequent display in the super-low power consumption mode is identical to that described in the other embodiments, so that the description will be omitted.

As described hereinbefore, according to the video display device of the third embodiment of the present invention, when a disaster such as an earthquake takes place and the emergency warning condition occurs in which power consumption reduction is needed, the screen display is automatically reduced to the minimum level that allows the viewer to obtain information, thereby minimizing the power consumption of video display.

The present third embodiment has described the case where whether or not the emergency warning condition has occurred is determined by both emergency warning analysis part 110 and emergency warning reception part 113. It is alternatively possible, however, to provide emergency warning reception part 113 only so as to receive the emergency warning signal, thus achieving the super-low power consumption mode.

The video display device of the present invention has been described as a television receiver that receives digital broadcasting waves. Alternatively, however, the video display device can be a television receiver that receives analog broadcasting waves as long as it can achieve the super-low power consumption mode by receiving an emergency warning signal.

It is also possible to implement a standby state in which power is supplied exclusively to the parts related to a means for extracting the emergency warning descriptor from the additional information of the TS and determining whether or not the emergency warning condition has occurred, and to a means for receiving the emergency warning signal. In this case, even if the viewer is not watching on the video display device of the present invention, whether the emergency warning condition has occurred or not can be determined in the standby state. When the viewer starts to watch in this condition, the video is displayed in the super-low power consumption mode from the beginning of viewing. As a result, it is prevented to consume large power for display in the emergency warning condition caused by a disaster or other reasons.

### FOURTH EXEMPLARY EMBODIMENT

A fourth embodiment will describe another example of display control in the super-low power consumption mode when the display part is a liquid display device. The block diagram showing the structure is identical to Fig. 1, 6 or 8, and the operation including the determination of the occurrence of the emergency warning condition is identical to that of the first, second or third embodiment.

In general, in a liquid crystal display device, the luminance and hue of the display video are not determined only by the signal to drive the liquid crystal panel but are also determined by the backlights. Consequently, the video information to be displayed is determined also by the backlights and the light guide panel. The display power consumption of the liquid crystal display device is hardly affected by the display data, and is mainly made up of the power consumed by the backlights. Therefore, in the power saving mode which reduces power consumption by lowering the luminance, the power consumption reduction is achieved by decreasing the luminance of the backlights. In this case, although the whole luminance is lowered, the video information is maintained, thus allowing the viewer to enjoy programs as usual.

The example of display control in the super-low power consumption mode of the video display device of the fourth embodiment of the present invention will be described as follows. First, the structure will be described.

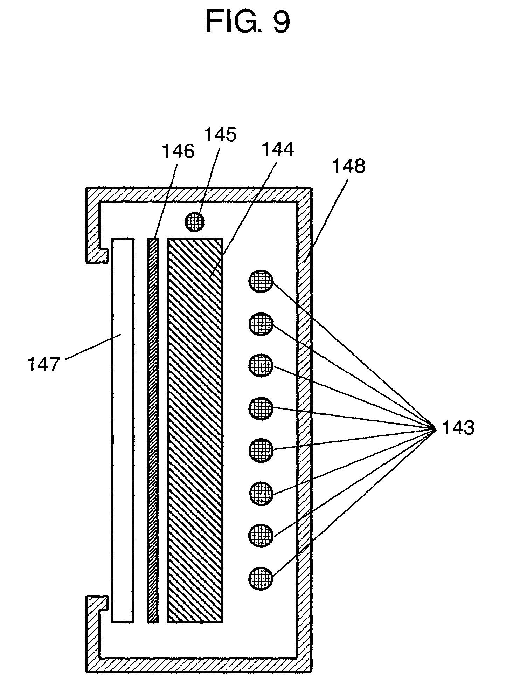

In Fig. 9, the video display device of the fourth embodiment of the present invention is provided with a plurality of backlights 143 inside case 148. The light of the backlights passes through light guide panel 144 and uniformly irradiates liquid crystal panel 147 from its back via diffused panel 146. Besides backlights 143, the video display device is also provided with miniature backlight 145. Thus, the display part of the fourth embodiment is made up of backlights 143, light guide panel 144, diffused panel 146, liquid crystal panel 147 and miniature backlight 145.

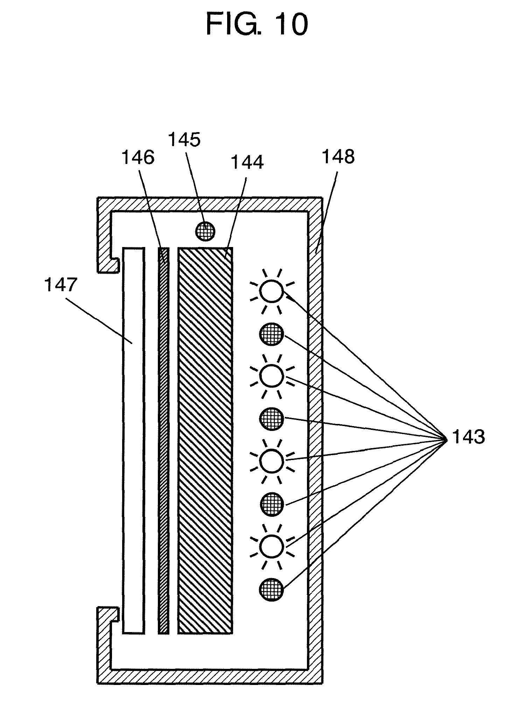

In the display part thus structured, in the super power consumption mode, as shown in Fig. 10, backlights 143 that are shown as white circles are exclusively turned on, and backlights 143 that are shown as black circles (the hatched area) are turned off. Uniform image quality suitable for the normal viewing is designed to be obtained by turning all backlights 143 on. Therefore, with only some of backlights 143 turned on, the video information is displayed nonuniformly by being affected by the positions of the backlights that are turned on. Of course, this makes the image quality too low for the viewer to enjoy the normal viewing. Even so, however, reducing by half or more the number of backlights 143 to be turned on which are provided on the back surface of the display device reduces the power required to light backlights 143, thereby achieving a drastic power consumption reduction as compared with the normal viewing condition.

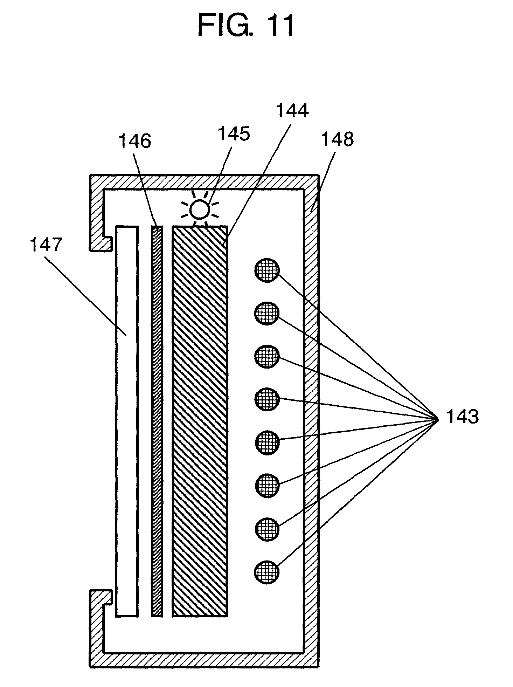

Fig. 11 shows another example in the super-low power consumption mode according to the fourth embodiment of the present invention. In Fig. 11, besides backlights 143 which are normally used, the video display device is also provided with miniature backlight 145 somewhere around light guide panel 144. All of backlights 143 are turned off and miniature backlight 145 is exclusively turned on in the super-low power consumption mode, thereby further reducing the power consumption in the super-low power consumption mode.

In a case where the super power consumption mode is achieved by controlling the lighting of the backlights, and emergency information is displayed by subtitle information, the backlights corresponding to the positions to display the subtitle information can be turned on exclusively with the other backlights turned off. In this case, the necessary subtitle information can be displayed more clearly, while drastically reducing the display power.

A drastic power consumption reduction can be also achieved without lowering the visibility of the subtitle display so much by locating miniature backlight 145 in accordance with the position of the subtitle display as follows. For example, the subtitle information is determined to be displayed on either the top or bottom of the screen, and when it is displayed on the top, miniature backlight 145 is located on the top of light guide panel 144, whereas when it is displayed on the bottom, miniature backlight 145 is located on the bottom of light guide panel 144.

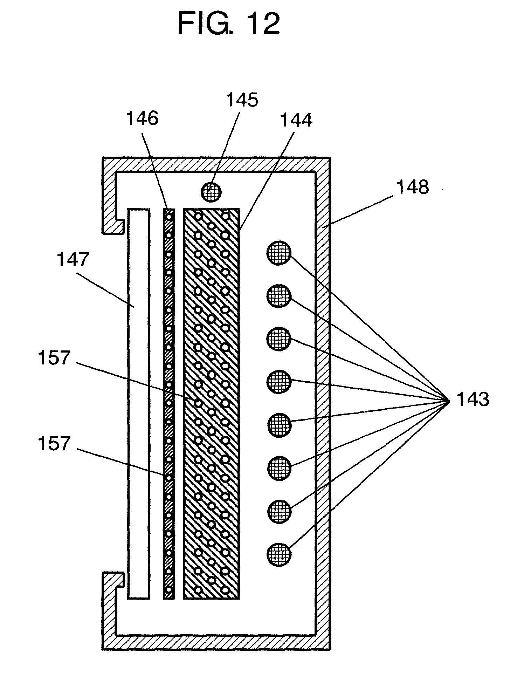

Fig. 12 shows further another example in the super-low power consumption mode according to the fourth embodiment of the present invention. In the structure shown in Fig. 12, one or both of light guide panel 144 and diffused panel 146 contains phosphorescent material 157 diffused therein. As phosphorescent material 157, a material that can emit phosphorescence long after the extinction of excitation light can be selected.

The following is a description of the operation of the display part thus structured. In the normal viewing condition with all of backlights 143 turned on, phosphorescent material 157 is excited by the light of the backlights. Then, when the emergency warning condition occurs and the super-low power consumption mode sets in, display control part 106 turns off all of backlights 143, but normally drives liquid crystal panel 147. As a result, phosphorescent material 157 contained in light guide panel 144 or diffused panel 146 can autofluoresce to provide video display for a certain period in spite of all of backlights 143 being turned off.

This allows the viewer to obtain information as video in the emergency warning condition such as a disaster, while achieving a drastic reducing power consumption reduction, although the viewer cannot enjoy programs with the normal image quality.

### FIFTH EXEMPLARY EMBODIMENT

A fifth embodiment will describe an example of the structure having another means of determining the occurrence of the emergency warning condition. The same components as those in the first to fourth embodiments will be referred to with the same reference remarks as those in the first to fourth embodiments, and their description will be omitted as appropriate.

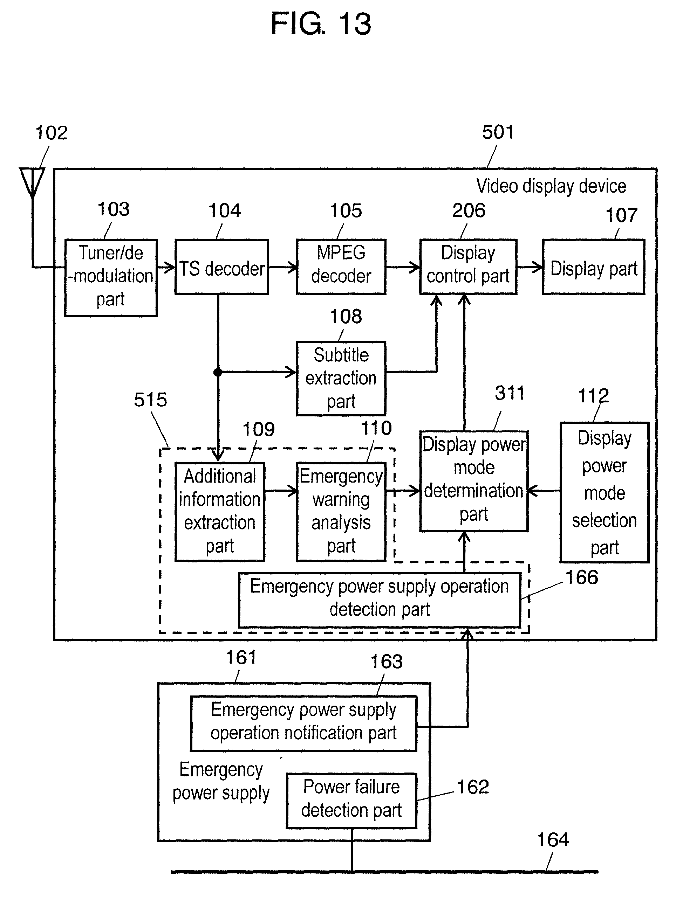

Fig. 13 is a block diagram showing the structure of an example of the fifth embodiment of the present invention. In the situation where video display device 501 of the present invention is installed, emergency power supply 161 is also provided to operate when a disaster or the like causes the power failure of the commercial power supply. Emergency power supply 161 can be a power storage type, driven by a fuel cell or a solar cell, or can be a generator driven by gasoline or the like.

Emergency power supply 161 is provided with power failure detection part 162 which monitors the supply of commercial power supply 164. Power failure detection part 162 makes emergency power supply 161 operate when commercial power supply 164 stops the supply over the predetermined time period, thus supplying the output of emergency power supply 161 in place of commercial power supply 164. Emergency power supply operation notification part 163, when emergency power supply 161 starts operation, outputs a signal indicating this.

Emergency power supply operation detection part 166 provided in video display device 501 of the present invention determines that the emergency warning condition has occurred when notified by the output of emergency power supply operation notification part 163 that emergency power supply 161 has started operation. The situation in which a power failure occurs and the emergency power supply starts operation indicates a condition in which at least some form of accident, more likely a disaster, has occurred and power consumption reduction is desperately needed. Consequently, the information indicating that the emergency power supply has started operation can be regarded as the information about the emergency warning. Thus in the fifth embodiment, emergency power supply operation detection part 166 makes up emergency warning determination part 515 which receives information about an emergency warning and determines that the emergency warning condition has occurred, based on the information.

The subsequent operation in the case where the emergency warning condition is determined to have occurred is identical to that in the first to fourth embodiments, and display power mode determination part 111 acquires information indicating whether or not the emergency warning condition has occurred from emergency power supply operation detection part 166, and determines the display power mode. Since the emergency warning condition has occurred in this case, the display power mode is switched to the super-low power consumption mode regardless of the output of display power mode selection part 112.

Display control part 106 receives an indication signal indicating the super-low power consumption mode from display power mode determination part 311, and changes the data in the video stream to a prescribed display content in the super-low power consumption mode or provides setting controls to specific display part 107. As a result, of all power consumption modes available, the lowest power consumption mode is achieved that can display some form of information.

As described above, according to the video display device of the fifth embodiment of the present invention, when a disaster such as an earthquake takes place and the emergency warning condition occurs in which power consumption reduction is needed, the screen display is automatically reduced to the minimum level that allows the viewer to obtain information, thereby minimizing the power consumption of video display. Thus, a video display device is provided which can secure information collection for a long time in the event of an emergency or disaster.

Since the video processing and display control in the super-low power consumption mode are identical to those in the first to fourth embodiments, their description will be omitted.

### SIXTH EXEMPLARY EMBODIMENT

Unlike the structure shown in the fifth embodiment, the power failure detection part can be located inside the video display device. A sixth embodiment will describe an example having such a structure.

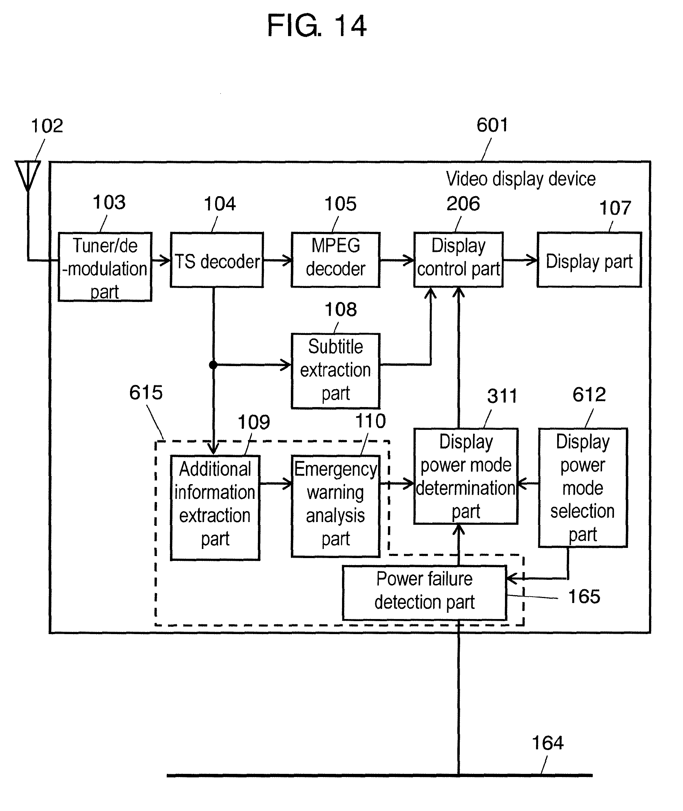

In Fig. 14, power failure detection part 165 monitors the power supply supplied to video display device 601, and when the power supply is stopped over a predetermined period of time, outputs a power failure detection signal and continues to output the signal even after the recovery of the power supply. In order to invert the power failure detection signal, a release pulse is outputted from display power mode selection part 612.

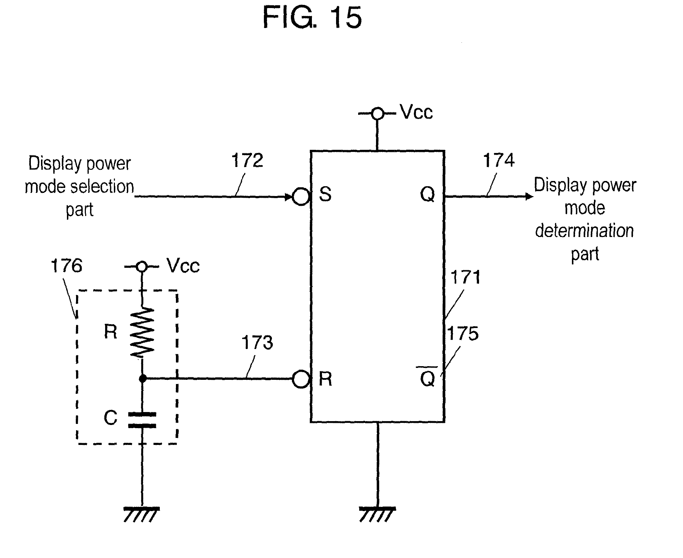

Fig. 15 is a circuit diagram showing an example of the structure of power failure detection part 165 according to the sixth embodiment of the present invention. As shown in Fig. 15, power failure detection part 165 can be achieved by bistable multivibrator 171 provided with CR integration circuit 176. CR integration circuit 176 which stores electric charges supplied from the power supply is connected with low-output-side input 173 of bistable multivibrator 171. When there is a power failure, the electric charges of CR integration circuit 176 are discharged. Even if the power supply is resumed, it takes time to recover the voltage of CR integration circuit 176 so that output 174 of bistable multivibrator 171 is fixed to a low value. The output can be inverted by providing a pulse to high-output-side input 172.

The following is a description of the operation of video display device 601 of the sixth embodiment of the present invention thus structured.

There are cases where power supply is once stopped in the event of a disaster or the like, but is recovered by emergency power restoration. In such a case, the temporary interruption of the supply from commercial power supply 164 makes power failure detection part 165 invert a power failure detection signal and output it to display power mode determination part 311. Display power mode determination part 311 operates the power failure detection signal as a signal indicating the emergency warning condition. The situation in which a power failure occurs is considered to be a condition in which at least some form of accident, more likely a disaster, has occurred and power consumption reduction is desperately needed. Consequently, the information indicating that a power failure has occurred can be regarded as the information about the emergency warning. Thus in the sixth embodiment, power failure detection part 165 makes up emergency warning determination part 615 which receives information about an emergency warning and determines that the emergency warning condition has occurred, based on the information.

The subsequent operation in the case where the emergency warning condition is determined to have occurred is identical to the operation in the first to fifth embodiments, and the display power mode is switched to the super-low power consumption mode regardless of the output of display power mode selection part 612. As a result, the data in the video stream is changed to a prescribed display content in the super-low power consumption mode, or setting controls are provided to specific display part 107, so that of all power consumption modes available, the lowest power consumption mode is achieved that can display some form of information. Since the video processing and display control in the super-low power consumption mode are identical to those in the first to fifth embodiments, their description will be omitted.

When determining that the emergency warning condition is gone, the viewer can either select another display power mode in display power mode selection part 612 or release the super-low power consumption mode. As a result, display power mode selection part 612 outputs a release pulse to invert the power failure detection signal, thereby releasing the super-low power consumption mode.

As described hereinbefore, according to the video display device of the sixth embodiment of the present invention, when a disaster such as an earthquake takes place and the emergency warning condition occurs in which power consumption reduction is needed, the screen display is automatically reduced to the minimum level that allows the viewer to obtain information, thereby minimizing the power consumption of video display. Thus, a video display device is provided which can secure information collection for a long time in the event of an emergency or disaster.

### INDUSTRIAL APPLICABILITY

The video display device of the present invention can automatically reduce power consumption in the emergency warning condition such as a disaster, and is useful as a video display device which acquires and displays video information, such as television receivers, CATVs and personal computers that acquire information through a network like the Internet and display the information on the screen.

## Claims

1. A video display device comprising:
a display power mode selection part for outputting an indication signal corresponding to a display power mode based on a selection action;
an emergency warning determination part for receiving information about an emergency warning, and determining that an emergency warning condition has occurred, based on the information;
a display power mode determination part for receiving an output signal of each of the display power mode selection part and the emergency warning determination part; determining a display power mode based on an output of the display power mode selection part when the emergency warning condition is determined to have not occurred; and providing the display control part instructions to switch the display power mode to a super-low power consumption mode, regardless of the output of the display power mode selection part when the emergency warning condition is determined to have occurred;
a display part for displaying video; and
a display control part for controlling the display part so that video information is displayed in a display power mode based on an indication signal of the display power mode determination part so as to be displayed as actual video.

2. The video display device of claim 1, wherein
the emergency warning determination part comprises:
an additional information extraction part for extracting additional information added to acquired video audio information; and
an emergency warning analysis part for determining whether the emergency warning condition has occurred or not, based on the information about the emergency warning contained in the additional information.

3. The video display device of claim 2, wherein
the emergency warning analysis part determines whether the emergency warning condition has occurred or not by acquiring information about a flag and area code of an emergency information descriptor contained in the additional information.

4. The video display device of claim 1, wherein
the emergency warning determination part comprises:
an emergency warning reception part for receiving an emergency warning signal which is announced outside; determining that an input of the emergency warning signal indicates that the emergency warning condition has occurred; and notifying the display power mode determination part that the emergency warning condition has occurred.

5. The video display device of claim 1, wherein
the emergency warning determination part comprises:
an emergency power supply operation detection part for determining that the emergency warning condition has occurred when receiving a signal indicating that an emergency power supply installed outside starts operation.

6. The video display device of claim 1, wherein
the emergency warning determination part comprises:
a power failure detection part for monitoring power supply supplied to the video display device; outputting a power failure detection signal when the power supply is stopped over a predetermined period of time; and continuing to output the power failure detection signal even after the power supply is recovered.

7. The video display device of any one of claims 1 to 6, wherein
the super-low power consumption mode achieves power consumption reduction by the display control part changing the video information so as to be displayed in monochrome, and then reversing a monochromatic color and black on display in such a manner that, of the monochromatic color and black, the color consuming less power accounts for at least half of a screen area.

8. The video display device of any one of claims 1 to 6, wherein
the super-low power consumption mode achieves power consumption reduction by the display control part changing the video information so as to be displayed in monochrome, and then making the video information displayed in only one of output colors of the display part.

9. The video display device of any one of claims 1 to 6, wherein
the super-low power consumption mode achieves power consumption reduction by the display control part changing the video information so as to be displayed in monochrome, and then further changing the video information in such a manner that an area with a luminance not higherlower than a specified level is made not to emit light, and an area with a luminance higher than the specified level is displayed with the specified level of luminance.

10. The video display device of any one of claims 1 to 6, wherein
the super-low power consumption mode achieves power consumption reduction by the display control part changing the video information in such a manner that an area of a display range is reduced to not more than 1/2 by one of thinning out and interpolation, and that an area other than the display range is made not to emit light.

11. The video display device of any one of claims 1 to 6 further comprising:
a subtitle extraction part for extracting subtitle information and forming the subtitle information into information for screen display, wherein
the super-low power consumption mode achieves power consumption reduction by the display control part changing video on the display part in such a manner that motion information is undisplayed; a background is blackened; and the subtitle information is exclusively displayed in one of white and a color other than black.

12. The video display device of any one of claims 1 to 6, wherein
the display part is a liquid crystal display device comprising a liquid crystal panel and backlights; and
the super-low power consumption mode achieves power consumption reduction by the display control part reducing a number of the backlights to be turned on to not larger than 1/2 of a number in a normal viewing condition.

13. The video display device of any one of claims 1 to 6, wherein
the display part is a liquid crystal display device comprising a liquid crystal panel, a backlight, a light guide panel for guiding light of the backlight, and a light-emitting part located on a side surface of the light guide panel; and
the super-low power consumption mode achieves power consumption reduction by the display control part turning on the backlight and turning off the light-emitting part.

14. The video display device of any one of claims 1 to 6, wherein
the display part is a liquid crystal display device comprising: a liquid crystal panel; a backlight; and at least one of a light guide panel for guiding light of the backlight and a diffused panel for diffusing light transmitted by the light guide panel,
the at least one of the light guide panel and the diffused panel contains phosphorescent material diffused therein, the phosphorescent material being excited by the light of the backlight and emitting light even after extinction of excitation light, and
the super-low power consumption mode achieves power consumption reduction by the display control part turning off the backlight and normally driving the liquid crystal panel.
